# NEUE EUROPÄISCHE PATENTSCHRIFT

(11) **EP 2 977 184 B2**
(45) Veröffentlichungstag und Bekanntmachung des Hinweises auf die Entscheidung über den Einspruch: **22.02.2023**
(45) Hinweis auf die Patenterteilung: 04.09.2019
(21) Anmeldenummer: 15002111.1
(22) Anmeldetag: 16.07.2015
(51) Int. Cl.: B29C 49/78

(54) **VOLUMENGESTEUERTE BLASLUFTZUFÜHRUNG**
VOLUME CONTROLLED BLOWN AIR SUPPLY
ENTREE D'AIR DE SOUFFLAGE A COMMANDE DE VOLUME

(30) Priorität: 25.07.2014 DE 102014010861
(43) Veröffentlichungstag der Anmeldung: 27.01.2016
(73) Patentinhaber: KHS GmbH, 44143 Dortmund (DE)
(72) Erfinder: Klatt, Dieter, 22147 Hamburg (DE); Balkau, Karl-Heinz, 22113 Oststeinbek (DE); Litzenberg, Michael, 21502 Geesthacht (DE); Linke, Michael, 22159 Hamburg (DE)
(74) Vertreter: Eisenführ Speiser

(56) Entgegenhaltungen:
- EP-A1- 2 669 069
- EP-B1- 2 091 715
- EP-B1- 2 250 413
- EP-B1- 2 423 543
- WO-A1-2012/139717
- WO-A1-2013/135838
- WO-A1-2014/068080
- DE-A1-102006 007 157
- DE-A1-102013 111 950
- DE-B3-102005 035 878
- DE-B4-102004 019 152
- DE-U1-202004 015 982
- DE-U1-202004 018 237
- US-A1- 2003 209 266
- US-A1- 2006 012 085
- US-A1- 2006 110 483
- US-A1- 2009 102 082
- US-A1- 2010 201 013
- US-A1- 2010 276 849
- US-A1- 2013 187 304

## Beschreibung

Die vorliegende Erfindung betrifft ein Verfahren zur Steuerung einer Blasmaschine für die Herstellung eines Behälters aus einem thermoplastischen Material gemäß dem Oberbegriff des Anspruchs 1 sowie eine Blasmaschine für die Herstellung von Behältern aus einem thermoplastischen Material gemäß dem Oberbegriff des Anspruchs 11.

Bei Verfahren der eingangs genannten Art wird zur Blasformung eines Behälters üblicherweise ein Blasgas bzw. eine Blasluft in einen thermisch vorkonditionierten Vorformling aus thermoplastischem Material eingeleitet. Typischerweise läuft die Blasformung zweistufig ab. In der ersten Phase - dem Vorblasen - wird der Vorformling mit einem ersten Druck von beispielsweise 10 bar beaufschlagt, damit sich das temperaturkonditionierte Material des Vorformlings kontrolliert und gleichmäßig ausdehnt und sich an die Wandungen der Blasform anlegen kann. In der zweiten Phase - dem Fertigblasen - wird der vorgedehnte Vorformling mit einem zweiten Druck von beispielsweise 40 bar beaufschlagt, damit sich das Material vollständig in die Konturen der verwendeten Blasform legt.

Da der Druck der Prozessgase an einer Blasmaschine normalerweise im Bereich von 40 bar liegt, wird der Blasdruck in der Vorblasphase bei herkömmlichen Systemen über ein Druckregelventil auf etwa 10 bar verringert.

In der Vorblasphase wird das Blasgas zum Beispiel über eine Drossel mit einem Leitungsquerschnitt von beispielsweise 4 mm² in den Vorformling eingeleitet. Die Einstellung der Drossel richtet sich nach verschiedenen Faktoren, wie zum Beispiel nach der Art des Materials des herzustellenden Behälters, nach dem Temperaturprofil mit dem der Vorformling thermisch konditioniert wird, nach der Wandungsdicke des Vorformlings und nach anderen Parametern. Die Drosselweite wird typischerweise einmalig manuell eingestellt und bleibt unverändert. Eine erneute manuelle Veränderung des Drosselquerschnitts kann zum Beispiel notwendig sein, wenn eine Drossel über ihre Lebensdauer verunreinigt oder die Blasmaschine auf andere Blasformen bzw. andere Vorformlinge eingestellt wird.

Nachteilig bei diesem Stand der Technik ist, dass einerseits der Druck der Blasluft für die Vorblasphase heruntergeregelt werden muss und andererseits, dass der Volumenstrom der Blasluft während des Vorblasens und Fertigblasens nicht einstellbar ist.

Ein Verfahren und eine Vorrichtung nach den Oberbegriffen der Ansprüche 1 und 11 sind in US2003209266 offenbart. Weitere Verfahren und Vorrichtungen werden in US2006012085, US2006110483 und US2010276849 offenbart.

Aufgabe der vorliegenden Erfindung ist es daher, ein Verfahren und eine Blasmaschine bereitzustellen, die die Herstellung von Behältern aus einem thermoplastischen Material bei hohen Durchsatzraten ermöglichen und die kontrollierte Einleitung einer Blasluft in einen Vorformling verbessern.

Diese Aufgabe wird gelöst durch ein Verfahren mit den Merkmalen des Anspruchs 1 und durch eine Blasmaschine mit den Merkmalen des Anspruchs 11. Vorteilhafte Ausgestaltungen sind in den Unteransprüchen angegeben.

Erfindungsgemäß ist ein Verfahren zur Steuerung einer Blasmaschine für die Herstellung eines Behälters aus einem thermoplastischen Material, wobei ein Blasgas zur Blasformung des Behälters in einen thermisch konditionierten Vorformling eingeleitet wird, während der Vorformling in einer Blasform der Blasmaschine gehalten wird, wobei das Blasgas in einer Vorblasphase derart in den Vorformling eingeleitet wird, dass sich das temperaturkonditionierte Material des Vorformlings der Wandung der Blasform nähert, das Blasgas in einer sich anschließenden Fertigblasphase derart in den Vorformling eingeleitet wird, dass das temperaturkonditionierte Material des Vorformlings in die Konturen der Wandung der Blasform gepresst wird, und wobei der Volumenstrom des Blasgases zumindest in der Vorblasphase durch ein einstellbares Drosselventil vorgegeben wird. Das erfindungsgemäße Verfahren zeichnet sich dadurch aus, dass als Drosselventil ein mittels einer Steuereinheit steuerbares Drosselventil verwendet wird, eine Steuereinheit ein Steuersignal zur Einstellung des Drosselventils erzeugt, und das Drosselventil in Abhängigkeit von dem Steuersignal eingestellt wird.

In einer bevorzugten Variante ist vorgesehen, dass als Drosselventil ein elektrisch betätigbares Drosselventil verwendet wird.

Bei der Verwendung eines durch eine Steuereinheit steuerbaren Drosselventils kann die Einleitung des Blasgases bzw. einer Blasluft in den thermisch vorkonditionierten Vorformling während einer Blasphase verändert werden. Die Einleitung des Blasgases kann also individuell an die das Ausdehnungsverhalten bestimmenden Eigenschaften des Vorformlings angepasst werden. Es sei bemerkt, dass die Ausdrücke Blasgas und Blasluft synonym verwendet werden. Zur Blasformung wird ein Blasgas verwendet, insbesondere kann eine Blasluft vorgesehen sein.

Bei der Erfindung ist vorteilhaft, dass nur noch ein einziger Blasdruck für das Vorblasen und Fertigblasen zur Verfügung gestellt werden muss. Insbesondere kann auf ein Druckregelventil zur Reduzierung des Hauptblasdruckes auf beispielsweise 10 bar für das Vorblasen verzichtet werden. Die Druckregelventile, die üblicherweise für das Verringern des Vorblasdruckes verwendet werden, sind sehr teuer und bedürfen einer ständigen Überwachung bzw. einer ständigen Wartung durch geschultes Personal. Der Einsatz eines Druckregelventils erhöht zudem die Komplexität des strömungsmechanischen Aufbaus an einer Blasmaschine. Bei der Anwendung des erfindungsgemäßen Verfahrens und bei der erfindungsgemäßen Blasmaschine kann auf ein Druckregelventil verzichtet werden.

Ein weiterer wesentlicher Vorteil beim Einsatz eines elektrisch betätigbaren Drosselventils liegt darin, dass die Einstellung der Drosselventile für jede Blasstation zentral über eine Steuerung ausgeführt werden kann. Ein Bediener der Blasmaschine, der einmalig das Profil für die Einleitung einer Blasluft in einen temperierten Vorformling zur Herstellung eines bestimmten Behälters ermittelt hat, muss die Einstellungsparameter nur zentral in der Steuerung hinterlegen. Die individuelle Einstellung der Drosseln für jede Blasstation der Blasmaschine kann entfallen. Die Steuereinheit sorgt vorzugsweise für eine identische Drosseleinstellung bzw. einem identischen Volumenstrom an jeder Blasstation.

Die Einstellung eines Drosselventils über eine zentrale Steuerung erübrigt die manuelle Einstellung jedes einzelnen, einer Blasstation zugeordneten Drosselventils. Eine spätere

Anpassung der Drosseleinstellung z.B. für das Vorblasen kann einfach und schnell über die zentrale Steuerung durchgeführt werden. Dies ermöglicht auch die individuelle Einstellung des Drosselventils für jede Blasstation. Dies kann z.B. bei Alterung bzw. Verschleiß eines einzelnen, einer bestimmten Blasstation zugeordneten Drosselventils notwendig sein.

Die Steuereinheit kann z.B. in der Prozesssteuerung der Blasmaschine integriert sein. Alternativ kann eine separate Steuerung vorgesehen sein. Bevorzugt ist die Steuereinheit in die Prozesssteuerung des strömungsmechanischen Systems der Blasmaschine integriert.

Zur Einstellung des elektrisch betätigbaren Drosselventils erzeugt die Steuereinheit ein Steuersignal. Das elektrische Steuersignal kann aus einzelnen, zeitlich voneinander getrennten Signalen bestehen oder ein kontinuierliches Signal sein. In Abhängigkeit vom verwendeten Drosselventil bzw. von der dem Drosselventil zugeordneten Betätigungseinrichtung kann das Steuersignal zumindest teilweise digitale und/oder analoge elektrische Signale umfassen. Insbesondere kann vorgesehen sein, dass das Steuersignal ein Steuerprofil ist, das den zeitlichen Verlauf bzw. die zeitliche Änderung der Drosselventileinstellung betrifft.

Es ist auch daran gedacht, statt oder neben einem elektrisch betätigbaren Drosselventil ein pneumatisch oder hydraulisch betätigbares Drosselventil zu verwenden. Die Steuereinheit erzeugt dafür entsprechend obiger Erläuterung ein pneumatisches oder hydraulisches Steuersignal, wobei die Steuersignale in diesem Fall nicht über elektrische Leiter oder kabellos sondern über Druckleitungen übertragen werden. Im Folgenden wird ein elektrisch steuerbares Drosselventil repräsentativ für pneumatisch oder hydraulisch steuerbare Drosselventile beschrieben. Die Erläuterungen und die beschriebenen Vorteile gelten für pneumatisch oder hydraulisch steuerbare Drosselventile entsprechend.

In einer Ausgestaltung der Erfindung wird der Volumenstrom der Blasluft stufenlos unter Verwendung eines stufenlos einstellbaren Drosselventils gesteuert. Alternativ wird der Volumenstrom stufenweise unter Verwendung eines stufig einstellbaren Drosselventils gesteuert.

Vorteilhaft bei der Verwendung eines stufenlos einstellbaren Drosselventils ist die feinjustierbare Einstellung des Volumenstroms der Blasluft. Gegenüber einem stufenlos einstellbaren Drosselventil ist ein stufig einstellbares Drosselventil kostengünstig und mechanisch einfach konstruiert. Je nach Bedarf kann das erfindungsgemäße Verfahren mit einem stufenlos oder stufig einstellbaren Drosselventil durchgeführt werden.

Bevorzugt wird das Drosselventil eingangsseitig mit dem Gasdruck der Blasluft aus der Fertigblasphase beaufschlagt. Insbesondere ist bei dieser Ausführungsform also vorgesehen, dass ein dem Fertigblaskreis zugeordnetes Absperrventil und das Drosselventil im Vorblaskreis eingangsseitig mit dem gleichen Gasdruck beaufschlagt werden. Mit Verwendung des Gasdruckes des Blasgases der Fertigblasphase kann der Einsatz eines Druckminderers im Vorblaskreis einer Blasstation der Blasmaschine entfallen. Dies ist besonders vorteilhaft, da derartige Druckminderer teuer, komplex und fehleranfällig sind. Standzeiten der Blasmaschine, die durch Wartungsarbeiten an dem Druckminderer entstehen, entfallen. Bevorzugt ist demnach vorgesehen, das Vorblasen und das Fertigblasen mit dem gleichen Gasdruck durchzuführen, insbesondere ohne Druckmindervorrichtung im Vorblaskreis. Der Fertigblaskreis umfasst strömungsmechanische Bauelemente für die Durchleitung von Blasluft zum Fertigblasen des Behälters und der Vorblaskreis umfasst strömungsmechanische Bauelemente zur Durchleitung von Blasluft zum Vorblasen des Behälters bzw. des Vorformlings.

In einer Ausgestaltung ist vorgesehen, dass ein Drosselstellungssensor die Einstellung des Drosselventils erfasst und ein Stellungssignal erzeugt, das eine Information zur Stellung des Drosselventils enthält, und dass das Stellungssignal an die Steuereinheit übermittelt wird.

Die Stellungsinformation des Drosselventils ist insbesondere der an dem Drosselventil eingestellte Öffnungsquerschnitt. Die Übermittlung des Stellungssignals an die Steuereinheit kann einerseits durch den Drosselstellungssensor selbst oder durch eine damit verbundene Übertragungseinheit durchgeführt werden.

Weiter kann vorgesehen sein, dass die Steuereinheit das Steuersignal in Abhängigkeit von dem Stellungssignal erzeugt. Dadurch kann die Steuereinheit einen Regelalgorithmus ausführen, bei dem die Steuereinheit eine Regelabweichung zwischen einer den Öffnungsquerschnitt des Drosselventils beeinflussenden Stellgröße und der tatsächlichen Öffnung des Drosselventils ermittelt und im Regelkreis berücksichtigt. Damit ist eine gegenüber Störgrößen robuste Regelung der Drosselventileinstellung ermöglicht. Dies ist besonders vorteilhaft bei Drosselventilen, die z.B. aufgrund von Alterungs- und/oder Verschleißerscheinungen ihre Durchlasseigenschaften verändern.

Insbesondere kann vorgesehen sein, dass das Drosselventil einen im Bereich von 0,8 mm² bis einschließlich 20 mm² einstellbaren Öffnungsquerschnitt aufweist.

In einer Ausgestaltung der Erfindung ist in der Steuereinheit ein Sollprofil abgelegt, das einen zeitlichen Verlauf des Volumenstroms der Blasluft beschreibt und die Steuereinheit erzeugt das Steuersignal zur Einstellung des Drosselventils in Abhängigkeit von dem Sollprofil.

Das Sollprofil ist ein vorgegebener Verlauf der Drosselventileinstellung über zumindest einen Zeitraum. Insbesondere deckt das Sollprofil den Zeitbereich ab, in dem die Blasluft durch das Drosselventil in den Vorformling geleitet wird. Durch die Abbildung der Drosselventileinstellung über die Zeit, wird der zeitliche Verlauf des Volumenstroms durch das Drosselventil charakterisiert. Der zeitliche Verlauf des Volumenstroms der Blasluft durch das Drosselventil ergibt sich unter anderem aus der Druckdifferenz zwischen dem Eingang und dem Ausgang des Drosselventils und dem Öffnungsquerschnitt des Drosselventils. Das Sollprofil bestimmt deshalb insbesondere den gewünschten Öffnungsquerschnitt des Drosselventils über die Zeit. Bei Verwendung eines diskret, zwischen einer Offen- und einer Geschlossenstellung schaltenden Drosselventils bestimmt das Sollprofil vorzugsweise die Schaltfrequenz, mit der das Ventil zwischen einer Offen- und einer Geschlossenstellung hin und her schaltet. Bevorzugt ist das Sollprofil veränderbar.

Vorzugsweise erzeugt ein mit dem Drosselventil kommunizierend verbundener Volumenstromsensor ein Volumenstromsignal mit einer Information zum Mengenstrom der Blasluft, wobei das Volumenstromsignal an die Steuereinheit übermittelt wird. Unter dem Begriff Mengenstrom wird insbesondere der Volumenstrom verstanden. Die Information zum Mengenstrom kann in der Steuereinheit für Regel- und/oder Steueralgorithmen weiterverarbeitet werden.

In einer weiteren Ausgestaltung ist in der Steuereinheit für zumindest einen Zeitpunkt der Vorblasphase ein gewünschter oberer und/oder unterer Grenzwert des Volumenstroms des Blasgases abgelegt, wobei die Steuereinheit das Volumenstromsignal mit den Grenzwerten vergleicht und das Steuersignal in Abhängigkeit von der Differenz zwischen dem Volumenstromsignal und zumindest einem der Grenzwerte erzeugt.

Bei dieser Ausgestaltung ist vorgesehen, dass durch die oberen- und/oder unteren Grenzwerte ein Korridor festgelegt wird, in dessen Grenzen sich der durch das Drosselventil geleitete Volumenstrom bewegen soll. Durch den Vergleich des Volumenstromsignals mit den Grenzwerten kann ein direkter Rückschluss über das durch das Drosselventil geleitete Volumen gezogen werden. Die Steuerung kann zur Korrektur Steuersignale absetzen, um ein Über- bzw. Unterschreiten der Korridorgrenzen zu verhindern bzw. um den Messwert des Volumenstroms durch das Drosselventil in einem bestimmten Bereich innerhalb des Korridors zu halten. Bevorzugt sind die gewünschten Grenzwerte einstellbar.

Erfindungsgemäß wird als Drosselventil ein Ventil mit einem bewegbaren Verschlusskörper verwendet, insbesondere mit einem magnetisch bewegbaren Verschlusskörper. Drosselventile dieser Art sind z.B. RRV Ventile (Rapid Reaction Valve). Bei diesen Ventilen ist insbesondere vorgesehen, dass der Ventilsitz durch einen kugelförmigen Verschlusskörper abgedichtet wird. Für die magnetische Betätigung des Ventils ist der Verschlusskörper magnetisierbar und das Ventilgehäuse ist mit einer Magnetspule ummantelt. Das Funktionsprinzip solcher Ventile beruht darauf, dass sich in Höhe des Verschlusskörpers, also zum Beispiel in Höhe der Kugel, eine magnetische Unstetigkeitsstelle im Ventilgehäuse angeordnet ist. Bei der Bestromung der Magnetspule wirkt in Höhe der magnetischen Unstetigkeitsstelle ein Magnetfeld auf den Verschlusskörper, wodurch der Verschlusskörper aus dem Ventilsitz gehoben wird. Wird die Stromzufuhr unterbrochen, trägt die Strömung des durch das Ventil geleiteten Mediums den Verschlusskörper zurück in den Ventilsitz.

Derartige Ventile zeichnen sich durch sehr kurze Schaltzeiten aus. Bevorzug sind diese Ventile so ausgebildet, dass Schaltzeiten ab einer Millisekunde erreicht werden. Dies ermöglicht ein besonders gutes Dosieren der durch das Ventil geleiteten Blasluft.

Erfindungsgemäß ist dabei vorgesehen, dass der Verschlusskörper des Drosselventils mit einstellbarer Frequenz zwischen einer Offen- und einer Geschlossenstellung hin- und her bewegt wird. Durch die Wahl der Frequenz kann der durch das Ventil geführte Volumenstrom eingestellt werden. Insbesondere kann vorgesehen sein, das Ventil mit einem pulsweitenmodulierten Signal anzusteuern. Bevorzugt wird mit diesem Drosselventil der Volumenstrom des in der Vorblasphase in den Vorformling eingeleiteten Blasgases gesteuert.

Offenbart ist auch eine Steuerungsvorrichtung zur Steuerung einer Blasmaschine für die Herstellung eines Behälters aus einem thermoplastischen Material, wobei ein Blasgas zur Blasformung des Behälters in einen thermisch konditionierten Vorformling eingeleitet wird, während der Vorformling in einer Blasform der Blasmaschine gehalten wird, wobei die Steuerungsvorrichtung eine Steuereinheit umfasst, die eingerichtet ist, ein Steuersignal zur Einstellung eines den Volumenstrom des Blasgases bestimmenden Drosselventils zu erzeugen. Insbesondere ist daran gedacht, dass das Steuersignal zur Einstellung des Volumenstroms während der Vorblasphase dient.

In einer bevorzugten Ausgestaltung ist die Steuereinheit eingerichtet, das Steuersignal in Abhängigkeit von einem die Drosselstellung eines Drosselventils repräsentierenden Stellungssignal zu erzeugen.

In einer weiteren Ausgestaltung kann vorgesehen sein, dass in der Steuereinheit ein Sollprofil abgelegt ist, das einen zeitlichen Verlauf des Volumenstroms des Blasgases beschreibt und die Steuereinheit eingerichtet ist, das Steuersignal zur Einstellung des Drosselventils in Abhängigkeit von dem Sollprofil zu erzeugen.

Bevorzugt ist in der Steuereinheit für zumindest einen Zeitpunkt der Blasformung ein gewünschter oberer und/oder unterer Grenzwert des Volumenstroms des Blasgases abgelegt ist und die Steuereinheit ist eingerichtet, ein Volumenstromsignal mit einer Information zum Mengenstrom des in den Vorformling eingeleiteten Blasgases mit den Grenzwerten zu vergleichen und eine Differenz zwischen dem Volumenstromsignal und den Grenzwerten zu ermitteln.

Erfindungsgemäß ist auch eine Blasmaschine für die Herstellung eines Behälters aus einem thermoplastischen Material, bei der ein Blasgas zur Blasformung des Behälters in einen thermisch konditionierten Vorformling eingeleitet wird, während der Vorformling in einer Blasform der Blasmaschine gehaltert ist, wobei die Blasmaschine eingerichtet ist, ein erfindungsgemäßes Verfahren auszuführen.

Insbesondere ist daran gedacht, dass die Blasmaschine zumindest eines der in den Ausgestaltungen des Verfahrens genannten strömungsmechanischen Bauteile umfasst. Dies betrifft insbesondere das elektrisch betätigbare Drosselventil, den Drosseleinstellungssensor und den Volumenstromsensor.

Erfindungsgemäß wird als Drosselventil ein Ventil mit einem zwischen einer Offen- und einer Geschlossenstellung bewegbaren, insbesondere einem magnetisch bewegbaren Verschlusskörper verwendet, Erfindungsgemäß ist vorgesehen, dass der Verschlusskörper mit einer einstellbaren Frequenz zwischen der Offen- und der Geschlossenstellung hin und her bewegt wird.

In einer Ausgestaltung ist vorgesehen, dass das Drosselventil ein RRV (Rapid Reaction Valve) ist. Im Unterschied zu der Volumenstromsteuerung durch die Einstellung des Drosselquerschnitts wird der Volumenstrom bei Ventilen mit einem zwischen einer Offen- und einer Geschlossenstellung bewegbaren Verschlusskörper durch das Verhältnis zwischen Geschlossen- und Offenzeiten des Ventils bestimmt.

Die Vorzüge der erfindungsgemäßen Blasmaschine und der offenbarten Steuervorrichtung ergeben sich auch aus den zum erfindungsgemäßen Verfahren genannten Vorteilen.

Ausführungsbeispiele der Erfindung sind in den Figuren angegeben. Es zeigen:
- Fig. 1: schematisch den strömungsmechanischen Aufbau einer Blasgasführung mit stufenloser Drosselsteuerung,
- Fig. 2: schematisch den strömungsmechanischen Aufbau einer Blasgasführung mit stufenloser Volumenstromsteuerung,
- Fig. 3: schematisch den strömungsmechanischen Aufbau einer Blasgasführung mit stufenweiser Drosselsteuerung, und
- Fig. 4: schematisch den strömungsmechanischen Aufbau einer Blasgasführung mit einer aus dem Stand der Technik bekannten Blasluftsteuerung in der Vorblasphase.

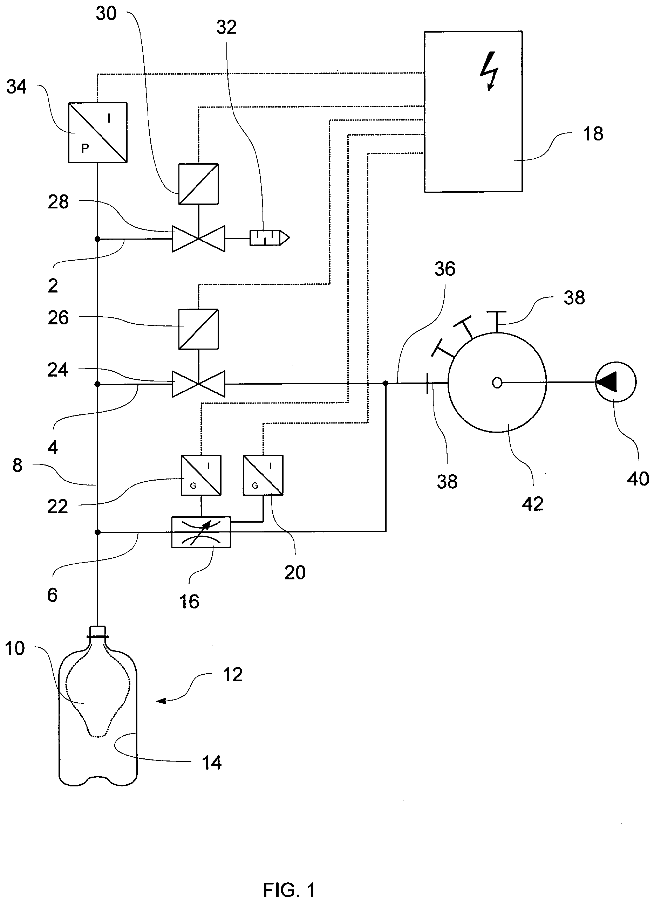

Fig. 1 zeigt schematisch den strömungsmechanischen Aufbau der Blasluftzuführung einer Blasmaschine an eine Blasform 12. Innerhalb der Blasform 12 ist ein Vorformling 10 angeordnet, der über eine Zuleitung 8 mit einer Blasluft beaufschlagbar ist. Die Blasluft wird aus einer Blasluftversorgung 40 an einen Blasluftverteiler 42 geleitet, der die Blasluft über die Anschlussstellen 38 und daran angeschlossene Versorgungsleitungen 36 an Blasstationen mit jeweils einer Blasform 12 verteilt. Bei der Ausführung der Blasmaschine als Rundläufervorrichtung kann der Blasluftverteiler 42 ein Drehverteiler sein.

Für die Beaufschlagung eines Vorformlings 10 mit der Blasluft, ist die Blasform kommunizierend mit der Blasluftzuleitung 8 verbunden. Die Blasluftzuleitung 8 ist im vorliegenden Ausführungsbeispiel mit den Gasleitungen 2, 4 und 6 verbunden. Über die Gasleitung 2 kann die Blasluftzuleitung 8 entlüftet werden. Zur Entlüftung wir das Ventil 28 geöffnet. Dafür übermittelt die Steuerung ein Signal an den Signalumsetzer 30, der mechanisch und/oder elektrisch an das Ventil 28 gekoppelt ist. Bei geöffnetem Ventil 28 kann ein Druck aus der Blasluftzuleitung 8 an den Schalldämpfer 32 gleitet und dort an die Umgebung abgegeben werden.

Die Steuerung der Ventile 24 und 52 läuft analog zur Ansteuerung des Ventils 28 ab. Alternativ können die Ventile 24, 28 und 52 über eine Steuerluft betätigbar sein (nicht dargestellt). Die den Ventilen 24, 28 und 52 zugordneten Signalumsetzer 26, 30 und 54 können dabei als Zustandssensoren vorgesehen sein, die die Öffnungsstellung bzw. die Geschlossenstellung der Ventile an die Steuerung 18 übermitteln.

Die Gasleitung 4 wird von dem Absperrventil 24 beherrscht. Das Absperrventil 24 ist mit dem Signalumsetzer 26 gekoppelt. Über die Gasleitung 4 kann eine Blasluft an den Vorformling 10 innerhalb der Blasform 12 geleitet werden, die insbesondere zum Fertigblasen des zu formenden Behälters dient. Das Fertigblasen erfolgt insbesondere schlagartig und mit einem hohen, schnell anliegenden Gasdruck. Insbesondere kann für das Fertigblasen ein Blasgasdruck von 40 bar vorgesehen sein. Für das schlagartige Einleiten einer Fertigblasluft in den Vorformling 10 kann das Absperrventil 24 einen Öffnungsquerschnitt von ca. 300 mm² aufweisen. Bevorzugt ist das Absperrventil 24 eingangsseitig direkt, d.h. ohne Druckminderer, Drosseln oder dergleichen, mit dem Verteiler 42 verbunden. Somit wird ein von dem Verteiler 42 bereitgestellter Blasdruck direkt über das Ventil 24 an die Blasform 12 weitergeleitet.

Die Gasleitung 6 dient zur Einleitung einer Blasluft in den Vorformling 10 während einer Vorblasphase. In der Vorblasphase wird die Blasluft derart in den Vorformling 10 eingeleitet, dass sich das Material des Vorformlings kontrolliert in Richtung der Innenwandung 14 der Blasform 12 ausdehnt. Zur Einstellung des Volumenstroms der Blasluft während der Vorblasphase wird erfindungsgemäß das als Drosselquerschnitt-Regelventil ausgeführte Drosselventil 16 verwendet. Das Drosselventil 16 ist über einen Signalumsetzer 22 mit der Steuerung 18 verbunden. Der Signalumsetzer 22 erhält zur Einstellung des Drosselventils 16 Signale von der Steuerung 18. Bevorzugt kann vorgesehen sein, dass das Drosselventil 16 mit einem Drosselstellungssensor 20 kommunizierend verbunden ist, wobei der Drosselstellungssensor 20 die Stellung des Drosselventils 16 erfasst und an die Steuerung 18 übermittelt. Über die Signale des Drosselstellungssensors 20 können Rückschlüsse über den störungsfreien Betrieb des Drosselventils 16 gezogen werden. Bevorzugt ist das Drosselventil 16 eingangsseitig direkt kommunizierend mit dem Verteiler 42 verbunden. Insbesondere ist vorgesehen, dass in der Verbindung zwischen dem Verteiler 42 und dem Drosselventil 16 keine druckmindernden Bauteile wie Druckminderer oder dergleichen angeordnet sind.

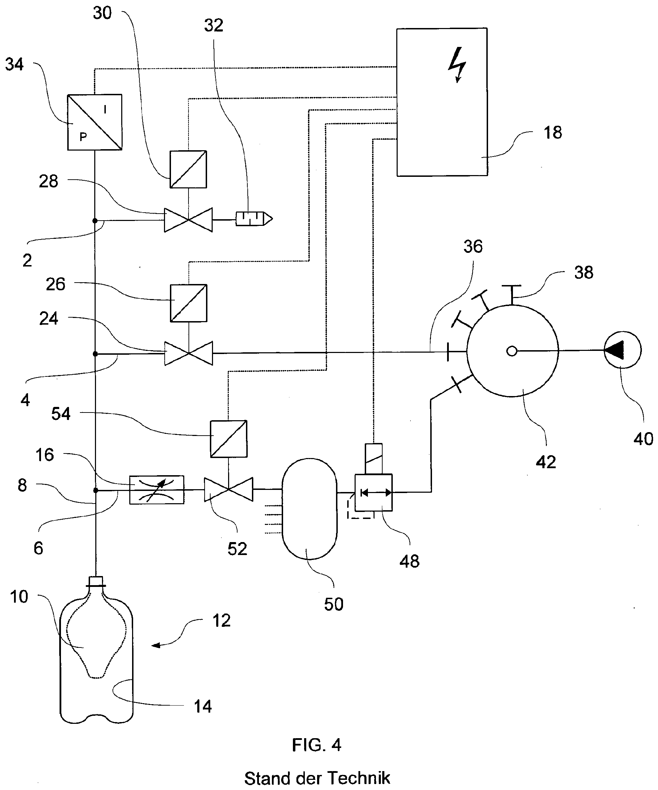

Die Fig. 1 zeigt ein Vorblasen in der Vorblasphase mit stufenloser Drosselsteuerung bzw. -regelung. Deutlich zu erkennen ist gegenüber dem Stand der Technik in Fig. 4, dass auf ein Druckregelventil 48 im Vorblaskreis verzichtet wird. Durch Anwendung des erfindungsgemäßen Verfahrens kann auf ein Herunterregeln des Hauptblasdruckes, z.B. auf 10 bar, verzichtet werden. Der Vorblasdruck wird direkt vom Fertigblasdruck bzw. von dem Verteiler 42 abgenommen. Der Verteiler 42 bezieht das Blasgas von der Gasquelle 40.

In dem Ausführungsbeispiel der Fig. 1 ist das Drosselventil 16 als elektromechanisches Stellglied ausgeführt, welches von der Steuerung 18 angesprochen wird. Das Drosselventil 16 gibt über den Drosselstellungssensor 20 eine Information an die Steuerung 18, in welcher die Drosseleinstellung abgebildet ist. Dies kann besonders hilfreich sein, z.B. dann, wenn die Steuerung 18 einen bestimmten Drosselwert vorgibt, das Drosselventil 16 selbst allerdings nicht den Einstellungswert erreicht. In diesem Fall wird der Drosselstellungssensor 20 eine abweichende Drosselposition an die Steuerung 18 melden und im Weiteren kann die Steuerung 18 eine Fehlermeldung generieren. Unabhängig vom konkreten Ausführungsbeispiel kann die Steuerung 18 also eingerichtet sein, eine Fehlermeldung zur Anzeige eines fehlerhaften Drosselventils 16 zu generieren und/oder zur Anzeige weiterzuleiten.

Grundsätzlich ist ein Drosselstellungssensor 20 nicht zwingend notwendig. Es ist vorgesehen, dass einmalig ein Einstellungsprofil für das Drosselventil 16 in der Steuerung 18 hinterlegt wird, das bei jedem Vorblasen durchlaufen wird. Eine Rückmeldung durch den Sensor 20 hilft allerdings bei der Fehleranalyse, z.B. wenn fertig geblasene Behälter aus einer bestimmten Blasstation Fehler aufweisen, die beim Vorblasen erzeugt wurden. Das Drosselventil 16 dieser Blasstation kann gezielt überprüft werden. Dies verringert Standzeiten der Blasmaschine.

Nach dem Vorblasen schließt sich das Fertigblasen des Behälters an. Dafür wird eine Blasluft aus dem Verteiler 42 über das Ventil 24 durch die Gasleitung 4 an die Blasluftzuführung 8 und damit an die Blasluft 12 geleitet. Bei dem Fertigblasen kommt es insbesondere darauf an, dass mit einem schlagartigen Druckanstieg das nach dem Vorblasen an die Wandung der Blasform geführte Material des Vorformlings plötzlich, d.h. besonders rasch, mit hohem Druck weiter gegen die Wandung der Blasform gepresst wird. Das sorgt für eine gute Ausbildung der Flaschenkontur und für ein schnelles Abkühlen der fertig geblasenen Flasche. Grundsätzlich ist es denkbar, dass auf das Ventil 24 und den dazugehörigen Fertigblaskreis verzichtet wird, und zwar dann, wenn das Drosselventil 16 ein schlagartiges Öffnen und damit ein schlagartiges Zuführen der Fertigblasluft in den Vorformling ermöglicht. Dafür müsste das Drosselventil 16 auf einen Öffnungsquerschnitt auf etwa 300 mm² geöffnet werden können und außerdem müsste das Drosselventil 16 eine schnelle Reaktionszeit aufweisen.

Bei 34 ist ein Druckmessumformer gezeigt, der den Gasdruck in der Blasluftzuleitung 8 erfasst und eine den Gasdruck beschreibende Information zur Übermittlung an die Steuerung 18 bereitstellt. Der Gasdruck des in den Vorformling eingeleiteten Blasgases kann somit durch die Steuerung 18 überwacht und für Steuerungszwecke weiterverarbeitet werden. Beispielsweise kann anhand des Blasgasdruckes eine Steuerung der Ventile 16, 24 und/oder 28 koordiniert werden.

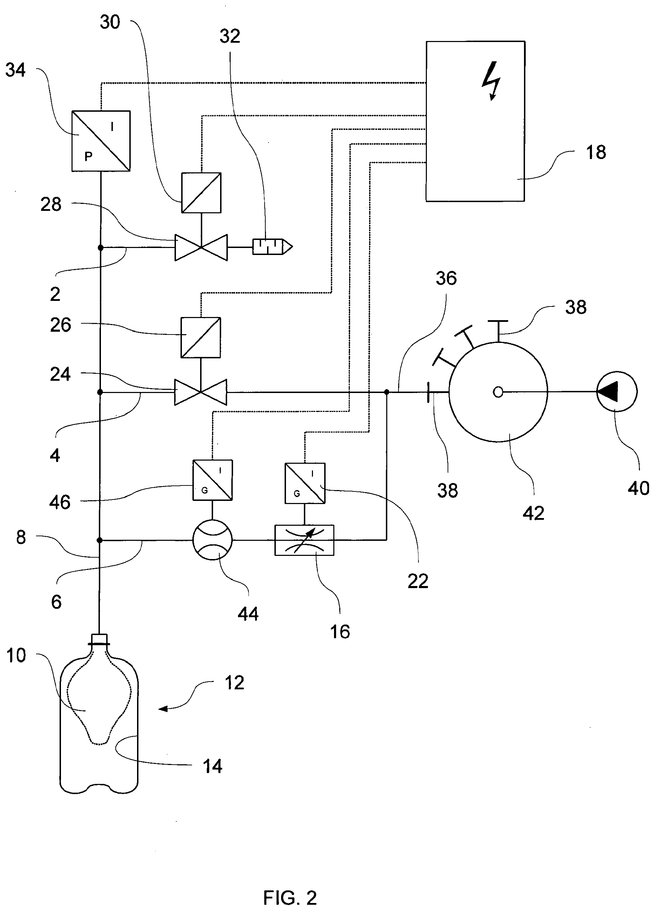

Fig. 2 zeigt schematisch den strömungsmechanischen Aufbau der Blasluftzuführung von einer Blasluftversorgung 40 über einen Blasluftverteiler 42 an die Blasform 12 in einer weiteren Ausführungsform. Im Unterschied zu Fig. 1 ist in dem Vorblaskreis, d.h. in dem Bereich der Gasleitung 6 zwischen der Blasluftzuführung 8 und dem Verteiler 42, ein Volumenstromsensor 44 vorgesehen. Der Volumenstromsensor ist insbesondere Stromabwärts hinter dem Drosselventil 16 angeordnet. Des Weiteren fehlt gegenüber Fig. 1 ein Drosselstellungssensor 20.

Der Volumenstromsensor 44 misst den Volumenstrom der Blasluft durch die Gasleitung 6 und leitet diese Information über einen Signalumsetzer 30 an die Steuerung 18. Die Informationen des Volumenstromsensors 44 werden für einen Steuer- und Regelalgorithmus verwendet, der von der Steuerung 18 abgearbeitet wird. Der Volumenstrom durch die Gasleitung 6 kann dabei als Steuergröße vorgesehen sein. Der Volumenstromsensor 44 kann auch stromaufwärts vor dem Drosselventil 16 angeordnet sein.

Über die Auswertung der Informationen aus dem Volumenstromsensor 44 kann der detaillierte Verlauf des in den Vorformling eingeführten Blasluftvolumens abgeleitet werden. Dies hat z.B. den Vorteil, dass damit direkte Rückschlüsse über das Ausdehnungsverhalten des Vorformlings 10 während der Vorblasphase gezogen werden können. Es ist z.B. denkbar, dass beim Abfahren eines in der Steuerung 18 hinterlegten Profils zur Steuerung des Drosselventils 16 Unterschiede bei der Ausformung der Vorformlinge 10 auftreten. Das kann z.B. daran liegen, dass die Vorformlinge Materialverformungen oder andere Unregelmäßigkeiten aufweisen. Durch Kenntnis des Volumenstroms beim Vorblasen können obere und/oder untere Grenzwerte festgelegt werden, zwischen denen sich das in den Vorformling 10 eingeführte Blasluftvolumen während des Vorblasens bewegen muss. Damit kann die Produktion defekter Behälter verhindert werden. Ein Rückschluss darauf, ob sich das Volumen der Blasluft während des Vorblasens in diesem durch die Grenzwerte gebildeten Korridor befindet, ist möglich, wenn ein Volumenstromsensor 44 verwendet wird. Alternativ kann der durch das

Drosselventil 16 geführte Volumenstrom bei Kenntnis des Differenzdruckes zwischen Eingang und Ausgang des Drosselventils 16 und des Drosselventilstellung durch die Steuerung 18 errechnet werden.

Grundsätzlich ist nicht vorgesehen, dass die Messgröße des Volumenstromsensors 32 direkt auf die Einstellung des Drosselventils 16 Einfluss nimmt. Die direkte Einflussnahme kann allerdings vorgesehen sein, wenn die Steuerung 18 anhand der Messwerte des Volumenstromsensors 44 erkennt, dass das in den Vorformling 10 eingeführte Blasluftvolumen die dafür festgelegten Korridorgrenzen über- oder unterschreitet. Zudem kann eine direkte Kopplung des Messwertes des Volumenstromsensors 32 an die Einstellung des Drosselventils 16 im Wege eines geschlossenen Regelkreises vorgesehen sein.

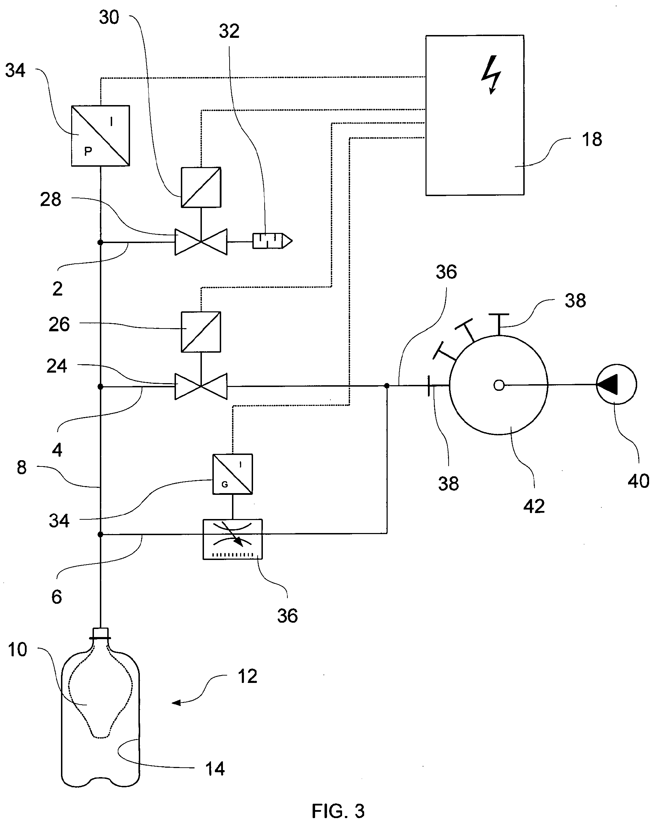

Der Einsatz eines Volumenstromsensors 44 hat zudem den Vorteil, dass Alterungszustände oder Funktionsuntüchtigkeiten eines Drosselventils 16 einer Blasstation erkennbar werden. Fig. 3 zeigt schematisch die Blasluftzuführung einer Blasmaschine an die Blasform 12, bei der ein stufenbehaftetes Drosselventil 36 im Vorblaskreis, also im Bereich der Gasleitung 6 zwischen dem Verteiler 42 und der Blasluftzuführung 8, angeordnet ist. Im Unterschied zu den Ausführungsbeispielen der Fig. 1 und 2 ist vorliegend also eine stufige Einstellung der Blasluftzuführung an den Vorformling 10 innerhalb der Blasform 12 während des Vorblasens vorgesehen. Dies kann vorteilhaft sein, wenn eine stufenlose und damit feinjustierbare Einstellung einer Drossel nicht notwendig ist für den Prozess des Vorblasens. Grundsätzlich ist ein stufenbehaftetes Drosselventil 36 einfacher aufgebaut als ein stufenloses Drosselventil 16 aus den Fig. 1 und 2. Das Drosselventil 36 ist günstiger und mechanisch weniger komplex. Ohne Weiteres ist denkbar, dass auch das stufenbehaftete Drosselventil 36 mit einem Drosseleinstellungssensor 20 aus Fig. 1 und/oder einem Volumenstromsensor 32 aus Fig. 2 kombiniert ist.

Fig. 4 zeigt rein schematisch einen aus dem Stand der Technik bekannten strömungsmechanischen Aufbau einer Blasluftzuführung von einer Blasluftversorgung 40 über einen Verteiler 42 an eine Blasform 12 einer Blasstation der Blasmaschine. Im Unterschied zu den erfindungsgemäßen Ausführungsbeispielen aus den Fig. 1 bis 3 ist im Vorblaskreis im Bereich der Gasleitung 6 zwischen dem Verteiler 42 und der Blasluftzuführung 8 ein manuell einstellbares Drosselventil 16 zur Volumenstromregeleung der Vorblasluft vorgesehen. Stromaufwärts zu dem Drosselventil 56 ist ein die Gasleitung 6 beherrschendes Blasluftventil 52 angeordnet, das über den Signalumsetzer 54 mittels der Steuerung 18 steuerbar ist. Weiter stromaufwärts zu dem Ventil 52 ist ein Behälter 50 an die Gasleitung 6 angeschlossen, der als Gaszwischenspeicher ausgebildet ist und eine Verteilung der Blasluft an weitere Blasstationen der Blasmaschine ermöglicht. Weiter stromaufwärts zu dem Behälter 50 ist ein Druckregelventil 48 vorgesehen, das eingangsseitig mit dem Hauptblasdruck aus dem Verteiler 42 beaufschlagt ist. Das Druckregelventil 48 verringert den Druck der Blasluft aus dem Verteiler 42 auf etwa 10 bar. Ausgangsseitig ist das Druckregelventil kommunizierend mit dem Behälter 50 verbunden. Der Behälter 50 verteilt die Blasluft ggf. an mehrere Blasstationen einer Blasmaschine.

Nachteilig bei der Blasluftführung gem. Fig. 4 ist der Einsatz eines teuren und wartungsintensiven Druckreglers 48 sowie eines Behälters 50, der die Verteilung der Vorblasluft auf die einzelnen Blasstationen einer Blasmaschine übernimmt. Der Vorblaskreis wird damit komplex und fehleranfällig. Zudem kann der Druck der Vorblasluft nur zentral an dem Druckregelventil 48 für alle Blasstationen einer Blasmaschine gemeinsam eingestellt werden.

**Bezugszeichenliste**

| | | | |
|---|---|---|---|
| 2 | Fluidleitung zur Entlüftung | 44 | Volumenstromsensor |
| 4 | Fluidleitung für Fertigblasluft | 46 | Signalumsetzer |
| 6 | Fluidleitung für Vorblasluft | 48 | Druckregelventil |
| 8 | Blasluftzuleitung zur Blasform | 50 | Druckbehälter |
| 10 | Vorformling | 52 | Absperrventil |
| 12 | Blasform | 54 | Signalumsetzer |
| 14 | Innenwandung der Blasform | 56 | Drossel |
| 16 | Drosselventil | | |
| 18 | Steuerung | | |
| 20 | Ventilstellungssensor | | |
| 22 | Signalumsetzer | | |
| 24 | Absperrventil | | |
| 26 | Signalumsetzer | | |
| 28 | Absperrventil | | |
| 30 | Signalumsetzer | | |
| 32 | Schalldämpfer | | |
| 34 | Druckmessumformer | | |
| 36 | Versorgungsleitung | | |
| 38 | Anschlussstelle für Blasstationen | | |
| 40 | Blasluftversorgung | | |
| 42 | Verteiler | | |

## Patentansprüche

1. Verfahren zur Steuerung einer Blasmaschine für die Herstellung eines Behälters aus einem thermoplastischen Material, wobei ein Blasgas zur Blasformung des Behälters in einen thermisch konditionierten Vorformling (10) eingeleitet wird, während der Vorformling (10) in einer Blasform (12) der Blasmaschine gehalten wird, wobei
das Blasgas in einer Vorblasphase derart in den Vorformling (10) eingeleitet wird, dass sich das temperaturkonditionierte Material des Vorformlings (10) der Wandung der Blasform (12) nähert,
das Blasgas in einer sich anschließenden Fertigblasphase derart in den Vorformling (10) eingeleitet wird, dass das temperaturkonditionierte Material des Vorformlings (10) in die Konturen der Wandung (14) der Blasform (12) gepresst wird, und wobei
der Volumenstrom des Blasgases zumindest in der Vorblasphase durch ein einstellbares Drosselventil (16) vorgegeben wird,
**dadurch gekennzeichnet, dass**
als Drosselventil (16) ein mittels einer Steuereinheit (18) steuerbares Drosselventil verwendet wird, eine Steuereinheit (18) ein Steuersignal zur Einstellung des Drosselventils (16) erzeugt, und das Drosselventil (16) in Abhängigkeit von dem Steuersignal eingestellt wird,
wobei als Drosselventil ein Ventil mit einem zwischen einer Offen- und einer Geschlossenstellung bewegbaren Verschlusskörper verwendet wird und
der Verschlusskörper des Drosselventils mit einstellbarer Frequenz zwischen der Offen- und der Geschlossenstellung hin und her bewegt wird.

2. Verfahren nach Anspruch 1, **dadurch gekennzeichnet, dass** als Drosselventil (16) ein elektrisch betätigbares Drosselventil verwendet wird.

3. Verfahren nach einem der Ansprüche 1 oder 2, **dadurch gekennzeichnet, dass** ein stufenlos einstellbares Drosselventil (16) oder ein stufig einstellbares Drosselventil (16) verwendet wird.

4. Verfahren nach einem der vorangegangenen Ansprüche, **dadurch gekennzeichnet, dass** das Drosselventil (16) eingangsseitig mit dem Gasdruck des Blasgases der Fertigblasphase beaufschlagt wird.

5. Verfahren nach einem der vorangegangenen Ansprüche, **dadurch gekennzeichnet, dass** ein Drosselstellungssensor (20) die Einstellung des Drosselventils (16) erfasst und ein Stellungssignal erzeugt, das eine Information zur Stellung des Drosselventils (16) enthält, und dass das Stellungssignal an die Steuereinheit (18) übermittelt wird, wobei insbesondere vorgesehen ist, dass die Steuereinheit (18) das Steuersignal zur Einstellung des Drosselventils (16) in Abhängigkeit von dem Stellungssignal erzeugt.

6. Verfahren nach einem der vorangegangenen Ansprüche, **dadurch gekennzeichnet, dass** ein Drosselventil mit einen im Bereich von 0,8 mm² bis einschließlich 20 mm² einstellbaren Öffnungsquerschnitt verwendet wird.

7. Verfahren nach einem der vorangegangenen Ansprüche, **dadurch gekennzeichnet, dass** in der Steuereinheit (18) ein Sollprofil abgelegt ist, das einen zeitlichen Verlauf des Volumenstroms des Blasgases beschreibt und die Steuereinheit (18) das Steuersignal zur Einstellung des Drosselventils (16) in Abhängigkeit von dem Sollprofil erzeugt.

8. Verfahren nach einem der vorangegangenen Ansprüche, **dadurch gekennzeichnet, dass** ein mit dem Drosselventil (16) kommunizierend verbundener Volumenstromsensor (32) ein Volumenstromsignal mit einer Information zum Mengenstrom des Blasgases erzeugt, wobei das Volumenstromsignal an die Steuereinheit (18) übermittelt wird.

9. Verfahren nach Anspruch 8, **dadurch gekennzeichnet, dass** in der Steuereinheit (18) für zumindest einen Zeitpunkt der Vorblasphase ein gewünschter oberer und/oder unterer Grenzwert des Volumenstroms des Blasgases abgelegt ist, wobei die Steuereinheit (18) das Volumenstromsignal mit den Grenzwerten vergleicht und das Steuersignal in Abhängigkeit von der Differenz zwischen dem Volumenstromsignal und zumindest einem der Grenzwerte erzeugt.

10. Verfahren nach einem der vorangegangenen Ansprüche, **dadurch gekennzeichnet, dass** als Drosselventil ein Ventil mit einem zwischen einer Offen- und einer Geschlossenstellung magnetisch bewegbaren Verschlusskörper verwendet wird.

11. Blasmaschine für die Herstellung eines Behälters aus einem thermoplastischen Material, wobei die Blasmaschine so eingerichtet ist, dass ein Blasgas zur Blasformung des Behälters in einen thermisch konditionierten Vorformling (10) eingeleitet wird, während der Vorformling (10) in einer Blasform (12) der Blasmaschine gehalten wird, wobei
das Blasgas in einer Vorblasphase derart in den Vorformling (10) eingeleitet wird, dass sich das temperaturkonditionierte Material des Vorformlings (10) der Wandung der Blasform (12) nähert,
das Blasgas in einer sich anschließenden Fertigblasphase derart in den Vorformling (10) eingeleitet wird, dass das temperaturkonditionierte Material des Vorformlings (10) in die Konturen der Wandung (14) der Blasform (12) gepresst wird, und wobei
der Volumenstrom des Blasgases zumindest in der Vorblasphase durch ein einstellbares Drosselventil (16) vorgegeben wird,
**dadurch gekennzeichnet, dass**
als Drosselventil (16) ein mittels einer Steuereinheit (18) steuerbares Drosselventil vorgesehen ist, wobei die Blasmaschine so eingerichtet ist, dass die Steuereinheit (18) ein Steuersignal zur Einstellung des Drosselventils (16) erzeugt, und das Drosselventil (16) in Abhängigkeit von dem Steuersignal eingestellt wird,
wobei als Drosselventil ein Ventil mit einem zwischen einer Offen- und einer Geschlossenstellung bewegbaren Verschlusskörper verwendet wird und
der Verschlusskörper des Drosselventils mit einstellbarer Frequenz zwischen der Offen- und der Geschlossenstellung hin und her bewegt wird.

12. Blasmaschine nach Anspruch 11, **dadurch gekennzeichnet, dass** zu ihrer Steuerung eine Steuerungsvorrichtung vorgesehen ist, die eine Steuereinheit (18) umfasst, die eingerichtet ist, ein Steuersignal zur Einstellung eines den Volumenstrom des Blasgases bestimmenden Drosselventils (16) zu erzeugen, wobei insbesondere vorgesehen ist, dass die Steuereinheit (18) eingerichtet ist, das Steuersignal zur Einstellung des Drosselventils (16) in Abhängigkeit von einem die Drosselstellung des Drosselventils (16) repräsentierenden Stellungssignals zu erzeugen.

13. Blasmaschine nach Anspruch 11 oder 12, **dadurch gekennzeichnet, dass** in der Steuereinheit (18) ein Sollprofil abgelegt ist, das einen zeitlichen Verlauf des Volumenstroms des Blasgases beschreibt, und die Steuereinheit (18) eingerichtet ist, das Steuersignal zur Einstellung des Drosselventils (16) in Abhängigkeit von dem Sollprofil zu erzeugen.

14. Blasmaschine nach einem der Ansprüche 11 bis 13, **dadurch gekennzeichnet, dass** in der Steuereinheit (18) für zumindest einen Zeitpunkt der Blasformung ein gewünschter oberer und/oder unterer Grenzwert des Volumenstroms des Blasgases abgelegt ist, und die Steuereinheit (18) eingerichtet ist, ein Volumenstromsignal mit einer Information zum Mengenstrom des in den Vorformling (10) eingeleiteten Blasgases mit den Grenzwerten zu vergleichen und eine Differenz zwischen dem Volumenstromsignal und den Grenzwerten zu ermitteln.

## Claims

1. Method for controlling a blow moulding machine for the production of a container made of a thermoplastic material, wherein a blowing gas for blow moulding the container is introduced into a thermally conditioned preform (10) while the preform (10) is held in a blow mould (12) of the blow mould, wherein
the blowing gas is introduced into the preform (10) during a pre-blowing phase in such a way that the temperature-conditioned material of the preform (10) approaches the wall of the blow mould (12),
the blowing gas is introduced into the preform (10) during a subsequent blowing completion phase in such a way that the temperature-conditioned material of the preform (10) is pressed into the contours of the wall (14) of the blow mould (12), and wherein
the volumetric flow of the blowing gas is specified by an adjustable throttle valve (16) at least during the pre-blowing phase,
**characterized in that**
a throttle valve that can be controlled by means of a control unit (18) is used as throttle valve (16), a control unit (18) generates a control signal for adjusting the throttle valve (16), and the throttle valve (16) is adjusted depending on the control signal,
wherein a valve with sealing body, which can be moved between an open and a closed position, is used as the throttle valve, and
the sealing body of the throttle valve is moved back and forth between the open and the closed position at an adjustable frequency.

2. The method according to Claim 1, **characterized in that** an electrically operable throttle valve is used as throttle valve (16).

3. The method according to any one of the Claims 1 or 2, **characterized in that** a infinitely adjustable throttle valve (16) or a incrementally adjustable throttle valve (16) is used.

4. The method according to any one of the preceding claims, **characterized in that** the throttle valve (16) is impinged on the input side by the gas pressure of the blowing gas during the blowing completion phase.

5. The method according to any one of the preceding claims, **characterized in that** a throttle position sensor (20) detects the setting of the throttle valve (16) and generates a position signal containing information on the position of the throttle valve (16), and that the position signal is transmitted to the control unit (18), wherein it is provided, in particular, that the control unit (18) generates the control signal for adjusting the throttle valve (16) depending on the position signal.

6. The method according to any one of the preceding claims, **characterized in that** a throttle valve with a opening cross-section, which can be adjusted within the range of 0.8 mm² to and including 20 mm², is used.

7. The method according to any one of the preceding claims, **characterized in that** a target profile is stored in the control unit (18), which maps a temporal progression of the volumetric flow of the blowing gas, and the control unit (18) generates the control signal for adjusting the throttle valve (16) depending on the target profile.

8. The method according to any one of the preceding claims, **characterized in that** a volumetric flow sensor (32), which is connected to the throttle vale (16) in a communicating manner, generates a volumetric-flow signal with information on the mass flow of the blowing gas, wherein the volumetric-flow signal is transmitted to the control unit (18).

9. The method according to Claim 8, **characterized in that** a desired upper and/or lower limit value of the volumetric flow of the blowing gas is stored in the control unit (18) for at least one point in time during the pre-blowing phase, wherein the control unit (18) compares the volumetric-flow signal with the limit values and generates the control signal depending on the difference between the volumetric-flow signal and at least one of the limit values.

10. The method according to any one of the preceding claims, **characterized in that** a valve with sealing body that can be magnetically moved between an open and a closed position is used as a throttle valve.

11. Blow moulding machine for the production of a container made of a thermoplastic material, wherein the blow moulding machine is configured in such a way that a blowing gas for blow moulding the container is introduced into a thermally conditioned preform (10) while the preform (10) is held in a blow mould (12) of the blowing machine, wherein
the blowing gas is introduced in such a way into the preform (10) during a pre-blowing phase that the temperature-conditioned material of the preform (10) approaches the wall of the blow mould (12),
the blowing gas is introduced into the preform (10) during a subsequent blowing completion phase in such a way that the temperature-conditioned material of the preform (10) is pressed into the contours of the wall (14) of the blow mould (12), and wherein
the volumetric flow of the blowing gas is specified by an adjustable throttle valve (16) at least during the pre-blowing phase,
**characterized in that**
as a throttle valve (16) that can be controlled by means of a control unit (18) is provided, wherein the blowing machine is configured in such a way that the control unit (18) generates a control signal for adjusting the throttle valve (16), and the throttle valve (16) is adjusted depending on the control signal,
wherein a valve with sealing body, which can be moved between an open and a closed position, is used as the throttle valve, and
the sealing body of the throttle valve is moved back and forth between the open and the closed position at an adjustable frequency.

12. Blow moulding machine according to Claim 11, **characterized in that** a control device is provided for its control comprising a control unit (18) that is configured to generate a control signal for adjusting a throttle valve determining the volumetric flow of the blowing gas (16), wherein, in particular, it is provided that the control unit (18) is configured to generate the control signal for adjusting the throttle valve (16) depending on a control signal representing the throttle position of the throttle valve (16).

13. Blow moulding machine according to Claim 11 or 12, **characterized in that** a target profile is stored in the control unit (18), which maps a temporal course of the volumetric flow of the blowing gas, and the control unit (18) is configured to generate the control signal for adjusting the throttle valve (16) depending on the target profile.

14. Blow moulding machine according to any one of the Claims 11 to 13, **characterized in that** in the control unit (18) a desired upper and/or lower limit value of the volumetric flow of the blowing gas is stored for at least one point in time during blow moulding, and the control unit (18) is configured to compare a volumetric-flow signal comprising information on the mass flow of the blowing gas introduced into the preform (10) with the limit values and detect a difference between the volumetric-flow signal and the limit values.

## Revendications

1. Procédé de commande d'une machine de moulage par soufflage pour la production de récipients en matériau thermoplastique, un gaz de soufflage pour le moulage par soufflage du récipient étant introduit dans une préforme (10) thermiquement conditionnée pendant que cette préforme (10) est maintenue dans un moule de soufflage (12) de la machine de moulage par soufflage,
le gaz de soufflage étant, au cours d'une phase de pré-soufflage, introduit dans la préforme (10) de façon telle que le matériau thermiquement conditionné de la préforme (10) s'approche de la paroi du moule de soufflage (12),
le gaz de soufflage étant, au cours d'une phase de finition suivante, introduit dans la préforme (10) de façon telle que le matériau thermiquement conditionné de la préforme (10) soit pressé dans les contours de la paroi (14) du moule de soufflage (12), et
le débit volumétrique du gaz de soufflage étant, au moins pendant la phase de pré-soufflage, fixé par une soupape d'étranglement (16) réglable,
**caractérisé en ce que**
l'on utilise comme soupape d'étranglement (16) une soupape pouvant être commandée au moyen d'une unité de commande (18), et **en ce qu'**une unité de commande (18) génère un signal de commande pour le réglage de la soupape d'étranglement (16) et que la soupape d'étranglement (16) est réglée en fonction du signal de commande, la soupape utilisée comme soupape d'étranglement étant munie d'un corps d'obturation déplaçable entre une position ouverte et une position fermée, et
le corps d'obturation de la soupape d'étranglement est déplacé avec une fréquence réglable en va-et-vient entre la position ouverte et la position fermée.

2. Procédé selon la revendication 1, **caractérisé en ce que** la soupape d'étranglement (16) utilisée est une soupape d'étranglement pouvant être actionnée électriquement.

3. Procédé selon l'une des revendications 1 ou 2, **caractérisé en ce qu'**une soupape d'étranglement (16) réglable en continu ou une soupape d'étranglement (16) réglable par paliers est utilisée.

4. Procédé selon l'une des revendications précédentes, **caractérisé en ce que** la pression du côté entrée de la soupape d'étranglement (16) est celle du gaz de soufflage de la phase de finition.

5. Procédé selon l'une des revendications précédentes, **caractérisé en ce qu'**un capteur de position (20) de l'étranglement saisit le réglage de la soupape d'étranglement (16) et génère un signal de position qui contient une information sur la position de la soupape d'étranglement (16) et que le signal de position est transmis à l'unité de commande (18), en quoi il est notamment prévu que l'unité de commande (18) génère le signal de commande pour le réglage de la soupape d'étranglement (16) en fonction du signal de position.

6. Procédé selon l'une des revendications précédentes, **caractérisé en ce que** la soupape d'étranglement utilisée a une section d'ouverture allant de 0,8 mm² à 20 mm² compris.

7. Procédé selon l'une des revendications précédentes, **caractérisé en ce qu'**un profil de consigne est stocké dans l'unité de commande (18), lequel décrit la variation dans le temps du débit volumétrique du gaz de soufflage et que l'unité de commande (18) génère le signal de commande pour le réglage de la soupape d'étranglement (16) en fonction du profil de consigne.

8. Procédé selon l'une des revendications précédentes, **caractérisé en ce qu'**un capteur (32) de débit volumétrique raccordé de façon communicante à la soupape d'étranglement (16) génère un signal de débit volumétrique avec un information sur la quantité débitée de gaz de soufflage, le signal de débit volumétrique étant transmis à l'unité de commande (18).

9. Procédé selon la revendication 8, **caractérisé en ce qu'**une valeur limite supérieure et/ou inférieure souhaitée pour le débit volumétrique du gaz de soufflage est stockée dans l'unité de commande (18) pour un moment au moins de la phase de pré-soufflage, l'unité de commande (18) comparant le signal de débit volumétrique avec les valeurs limites et générant le signal de commande en fonction de la différence entre le signal de débit volumétrique et l'une au moins des valeurs limites.

10. Procédé selon l'une des revendications précédentes, **caractérisé en ce que** la soupape d'étranglement utilisée est une soupape munie d'un corps d'obturation pouvant être déplacé de façon magnétique entre une position ouverte et une position fermée.

11. Machine de moulage par soufflage pour la production de récipients en matériau thermoplastique, la machine de moulage par soufflage étant aménagée de façon telle qu'un gaz de soufflage pour le moulage par soufflage du récipient est introduit dans une préforme (10) thermiquement conditionnée pendant que cette préforme (10) est maintenue dans un moule de soufflage (12) de la machine de moulage par soufflage,
le gaz de soufflage étant, au cours d'une phase de pré-soufflage, introduit dans la préforme (10) de façon telle que le matériau thermiquement conditionné de la préforme (10) s'approche de la paroi du moule de soufflage (12),
le gaz de soufflage étant, au cours d'une phase de finition suivante, introduit dans la préforme (10) de façon telle que le matériau thermiquement conditionné de la préforme (10) soit pressé dans les contours de la paroi (14) du moule de soufflage (12), et
le débit volumétrique du gaz de soufflage étant, au moins pendant la phase de pré-soufflage, fixé par une soupape d'étranglement (16) réglable,
**caractérisée en ce que**
est prévue en guise de soupape d'étranglement (16) une soupape d'étranglement pouvant être commandée au moyen d'une unité de commande (18), la machine de moulage par soufflage étant aménagée de façon telle que l'unité de commande (18) génère un signal de commande pour le réglage de la soupape d'étranglement (16) et que la soupape d'étranglement (16) est réglée en fonction du signal de commande.
la soupape d'étranglement utilisée est une soupape munie d'un corps d'obturation pouvant être déplacé entre une position ouverte et une position fermée,
le corps d'obturation de la soupape d'étranglement est déplacé avec une fréquence réglable en va-et-vient entre la position ouverte et la position fermée.

12. Machine de moulage par soufflage selon la revendication 11, **caractérisée en ce qu'**un dispositif de commande est prévu pour la commande de la machine, lequel dispositif comporte une unité de commande (18) conçue de façon à générer un signal de commande pour le réglage d'une soupape d'étranglement (16) qui commande le débit volumétrique du gaz de soufflage, l'unité de commande (18) étant notamment prévue pour générer le signal de commande de la soupape d'étranglement (16) en fonction d'un signal de position qui représente la position de l'étranglement de la soupape d'étranglement (16).

13. Machine de moulage par soufflage selon la revendication 11 ou 12, **caractérisée en ce qu'**un profil de consigne est stocké dans l'unité de commande (18), lequel décrit la variation dans le temps du débit volumétrique du gaz de soufflage et que l'unité de commande (18) est conçue pour générer le signal de commande pour le réglage de la soupape d'étranglement (16) en fonction du profil de consigne.

14. Machine de moulage par soufflage selon l'une des revendications 11 à 13, **caractérisée en ce qu'**une valeur limite supérieure et/ou inférieure souhaitée pour le débit volumétrique du gaz de soufflage est stockée dans l'unité de commande (18) pour un moment au moins du moulage par soufflage, l'unité de commande (18) étant conçue pour comparer un signal de débit volumétrique comportant une information sur la quantité de gaz de soufflage introduit dans la préforme (10) avec les valeurs limites et déterminer une différence entre le débit volumétrique et les valeurs limites.
